# EUROPEAN PATENT SPECIFICATION

(11) **EP 0 491 382 B1**
(45) Date of publication and mention of the grant of the patent: **21.08.1996**
(21) Application number: 91121716.4
(22) Date of filing: 18.12.1991
(51) Int. Cl.: G11B 5/53

(54) **Magnetic head base**
Magnetkopfträger
Support de tête magnétique

(30) Priority: 19.12.1990 JP 403543/90; 30.04.1991 JP 98986/91
(43) Date of publication of application: 24.06.1992
(73) Proprietor: KABUSHIKI KAISHA TOSHIBA, Kawasaki-shi, Kanagawa-ken 210 (JP)
(72) Inventor: Tsutaki, Shoji, Yokohama-shi, Kanagawa-ken 230 (JP); Yamaki, Hiroshige, Kawasaki-shi, Kanagawa-ken 211 (JP)
(74) Representative: Lehn, Werner, Dipl.-Ing.

(56) References cited:
- EP-A- 0 185 844
- EP-A- 0 256 269
- EP-A- 0 288 321
- DE-A- 3 421 219
- DE-A- 3 729 168
- PATENT ABSTRACTS OF JAPAN vol. 14, no. 419 (P-1103)(4362) 10 September 1990
- PATENT ABSTRACTS OF JAPAN vol. 13, no. 239 (P-879)6 June 1989

## Description

### FIELD OF THE INVENTION

The present invention relates to a magnetic head used for a rotary head of a video tape recorder or the like, and a head apparatus assembled by using the magnetic head.

### DESCRIPTION OF THE RELATED ART

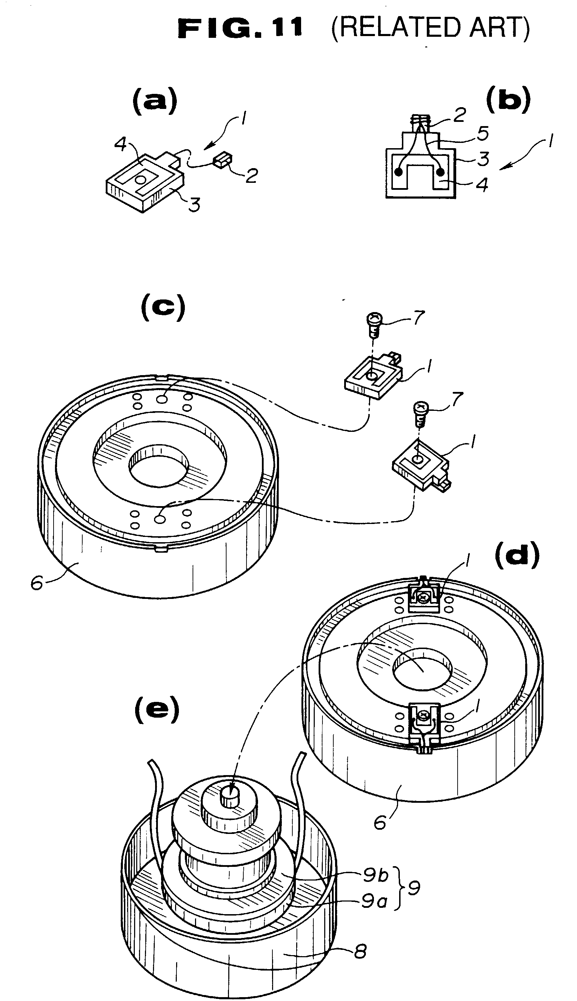

In the original structure of a magnetic head 1 used for a video tape recorder (VTR), a head chip 2 consisting of magnetic substances was bonded to a brass head base for fixing 3 and a wire was wound around the head chip as shown in Figs. 11(a) and (b). A terminal strip 4 is bonded to a surface of the head base 3. An end of a winding member 5 is soldered to the terminal strip 4. The magnetic head 1 is assembled in this way and fixed to a surface of an upper drum 6, which forms one of the rotary drums with a screw 7 as shown in Fig. 11(c). The fixed condition is shown in Fig. 11 (d). Figs. 11 (c) and (d) represent the rotary drums with two heads. The upper drum 6 assembled as shown in Fig. 11(d) is fitted into a lower drum 8 of the fixed side and the rotary portion formed in the center of the lower drum 8 as shown in Fig. 11(e). A rotary transformer 9 composed of a fixed side core 9a and a rotary side core 9b is disposed under the rotary portion. Wires are wound around each core 9a and 9b. The side of the magnetic head 1 and a side of a recording and/or reproducing circuit (not illustrated) are electro-magnetically coupled through the rotary transformer 9.

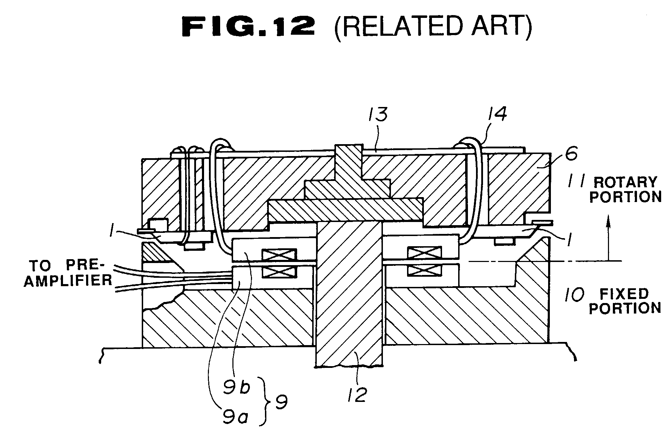

Fig. 12 shows the coupled condition of the upper drum 6 and the lower drum 8. In Fig. 12, a reference numeral 10 represents a fixed portion and 11 represents a rotary portion, and the upper drum 6 on the side of the rotary portion 11 is fixed on the tip of a rotary axis 12 and rotated by rotation driving means (not illustrated). Also, a printing base 13 is fixed on the upper surface of the upper drum 6. A coil on the rotary side of the rotary transformer 9 is connected to the printing base 13 with a wire 14.

Individual brass head base 3 is produced by die formation in the above mentioned former magnetic head 1. When the magnetic head 1 is assembled, a discrete head chip 2 is combined with the head base 3 and used. Therefore, the brass head base 3 is also served as a jig in a series of the manufacturing process including the process of bonding the head chip 2 which is previously produced to the head base 3, winding wires, molding and a curvature finishing of a chip sliding surface. Then, when the single magnetic head 1 discretely manufactured is carried, a special housing case has been needed so as not to damage the head. On the other hand, since a video tape recorder (VTR) integrated with a camera as an unit is becoming smaller and lighter, it is necessary to reduce the weight by grams. Also, it is required that a head base used for a small-sized video tape recorder becomes smaller and lighter and that the head base structure has excellent precision and processability.

For example, since a 8 mm VTR integrated with a camera as a unit has a small diameter of a rotary drum cylinder which is 30 mm and less, the size of the head base should be smaller.

Since brass has very high thermal conductivity, adjacent solder melts because of the thermal conductive rate traveling from, for example, a glass epoxy base bonding on the brass base to brass, when an end of a wire is fixed to a terminal strip with solder at wiring. Thus, there is a problem in which a soldering iron cannot be pressed for enough time.

Also, when a flying erase head used for completely erasing a recorded part at recording on a video tape recorder and eliminating a noise which is called rainbow noise is fitted to a rotary drum, it is unavoidable to position a dummy base of the same weight on a diagonal line in order to keep the weight balance at the time of rotating the rotary drum.

In such a condition, instead of metal brass, ceramic material and plastic material are examined as a material of base board; however, ceramic material is hard to be processed and has a disadvantage in its cost, and plastic material has weak weatherability and mechanical strength and has a big thermal expansion coefficient and weak heat stability. As a result, although the plastic material is light, the plastic material could not take the place of brass. Also, generally, a chip and base board require grounding to prevent electrification in the head chip. In this point, the ceramic and plastic materials cannot be used as the materials.

Further, a bonding agent is hard to penetrate through former base board materials when the head chip is bonded to the head base, so that it is a problem that the bonding strength of the chip is weak.

As explained above, due to the base board materials, a former magnetic head has a problem in its manufacturing process of, for example, processability, chip bonding strength, portability and soldering work, and also has a problem in that the magnetic head is unsuitable for miniaturizing and reducing the weight.

JP-A-2 161 605 discloses the features of the preamble of claim 1 and the use of a substrate of ceramic, glass or resin. JP-A-1 042 004 discloses a conductive resin used to form a holding case. The holding case surrounds a magnetic core used as a reading/writing head and enables attachment and grounding to a head base.

### SUMMARY OF THE INVENTION

A purpose of the present invention is to improve a base board material and to provide a magnetic head and a head apparatus which can intend to miniaturize its size and reduce its weight.

Another object of this invention is to provide a magnetic head and a head apparatus which can remove a problem in its manufacturing process, for example, processability, chip bonding strength, portability and soldering work.

According to the present invention there is provided a rotary type magnetic head as set out in claim 1.

### BRIEF DESCRIPTION OF THE DRAWINGS

Fig. 1 is a plan view showing a magnetic head of the first embodiment of this invention.

Fig. 2 is an exploded perspective view showing a head apparatus using a magnetic head of the first embodiment.

Fig. 3 is an exploded sectional view showing a head apparatus using a magnetic head of the first embodiment.

Fig. 4 is a plan view of a modification of the first embodiment.

Fig. 5 shows a magnetic head showing some features of this invention.

Fig. 6 shows a modification of the head of Fig. 5.

Fig. 7 is a perspective view showing the third embodiment of this invention.

Fig. 8 is a perspective view showing a chip bonding portion of a magnetic head of the fourth embodiment of this invention.

Fig. 9 is a sectional view taken on the line A-A in Fig. 8.

Fig. 10 is a side and sectional view showing a chip bonding method.

Fig. 11 is a perspective view showing a former magnetic head and a head apparatus using the magnetic head.

Fig. 12 is a sectional view showing a former head apparatus.

### DETAILED DESCRIPTION OF THE PREFERRED EMBODIMENTS

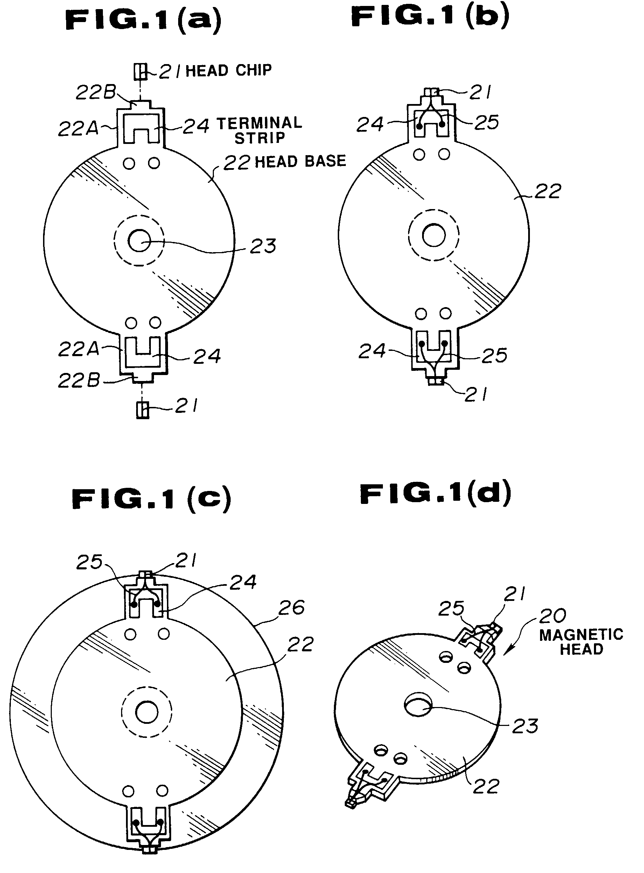

Figs. 1, 2 and 3 are process drawings showing a manufacturing process of a magnetic head in the first embodiment of this invention.

In Fig. 1(a), a head chip shown by a reference numeral 21 is produced by joining a pair of core half substances (magnetic substance) between which a gap portion is sandwiched. A head base 22 is an injection molding product shaped like an approximate circle with molding materials so as to fit a shape of a rotary drum. Two base portions 22A are provided on the head base 22 as the way of projecting from the circumference of the head base. Thus, the head base 22 is used for two heads. Further, a chip bonding portion 22B is provided as the way of projecting from each base portion 22A. A hole 23 which fits the rotary axis of the rotary drum is formed in the center of the head base 22. Terminal strips 24 are bonded on the surfaces of the above mentioned two base portions 22A, respectively. The above mentioned head base 22 is molded by injecting molding materials formed from conductive resin materials. For example, as described in the Gazette of Japanese Patent Laid Open No. 207313/1987, the molding materials are compounded of the following materials:
(A) thermosetting resin (such as epoxy resin) 14-40 percentage by weight including a hardening agent, hardening accelerator and catalyst;
(B)globular carbon and/or globular black lead having a diameter of 5-150 µ m, 10-85 percentage by weight; and
(C) inorganic filler 5-56 percentage by weight which uses an inorganic fiber having a grain diameter of 50 µ m and less or a fiber length 1 mm and less, corresponds to fine powders such as silica, CaCO₃ and glass bead or layer inorganic compound groups. As the layer inorganic compound groups, at least one of clay including montmorillonite, hectorite and hydrohalloysite, sulfide such as thallium sulfide, phosphate such as zirconium hydrogenphosphate, and halide such as ferric oxychloride can be used. Also, as the molding materials, thermoplastic resin as described in the Gazette of Japanese Patent Laid Open No. 95158/1989 can be used.

The head chip 21 is bonded on the surface of each chip bonding portion 22B. As shown in Fig. 1(b), a wire 25 is wound around the head chip 21 and an end of a wire 25 is soldered to the terminal strip 24.

Next, as shown in Fig. 1(c), a magnetic head in Fig. 1(b) is attached to a jig for tape lapping (cylinder for processing) 26 so as to lap the head chip 21 (finishing of the sliding surface) for tape. A finished magnetic head 20 is shown in Fig. 1(d).

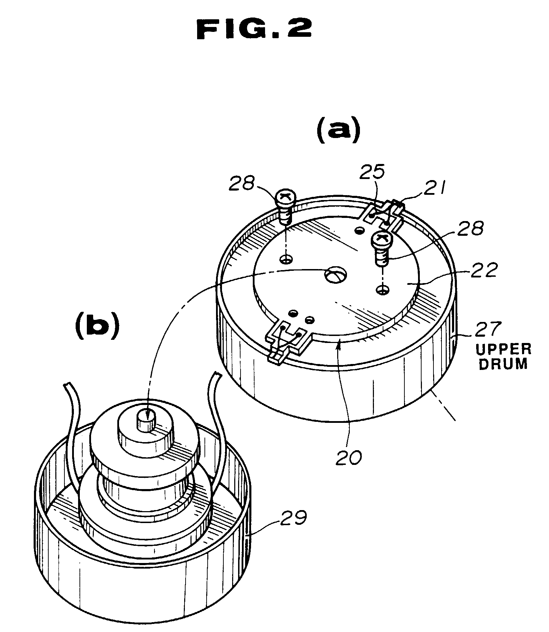

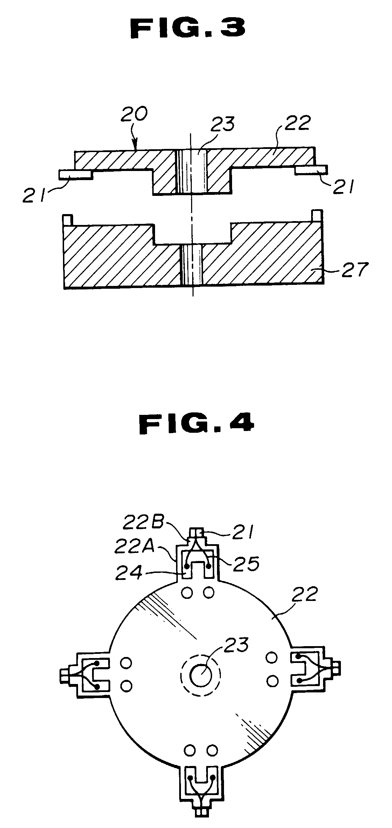

The magnetic head 20 in Fig. 1(d) is screwed with a screw 28 and fixed on a surface of an upper drum 27 as shown in Fig. 2(a). Fig. 3 shows the side section before combining the magnetic head 20 with the upper drum 27. Then, the upper drum 27 in Fig. 2(a) on which the magnetic head 20 is screwed is fitted into a rotary portion in a lower drum 29 in Fig. 2(b).

Fig. 4 shows a modification of the first embodiment. In this modification, the first embodiment is applied to four channel heads. In Fig. 4, a head base 22 having four base portions 22A is produced by injection molding and the head chip 21 is bonded to a tip portion 22B of each base portion 22A. Then, after a wire 25 is wound around the head chip 21, the end of the wire 25 is soldered to the terminal strip 24 bonded to each base portion 22A of the head base 22.

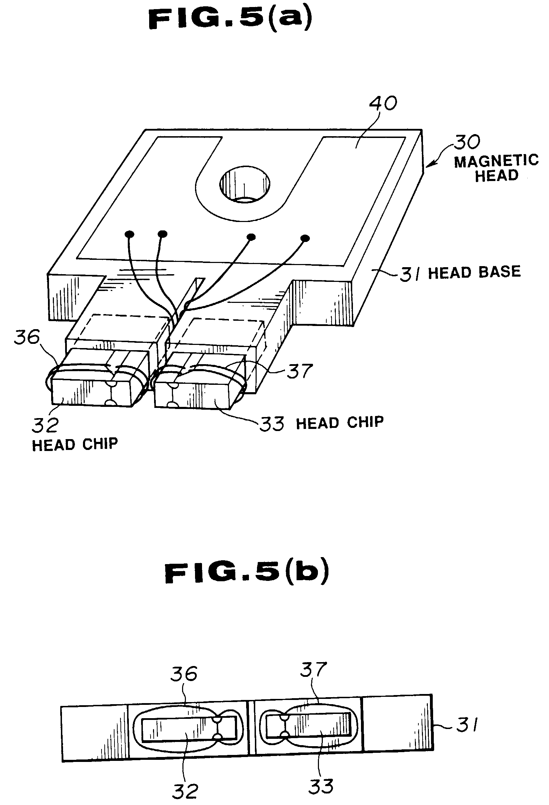

Fig. 5 shows the magnetic head showing some features of this invention. Fig. 5(a) is a perspective view and Fig. 5(b) is a front view.

This embodiment explains a double azimuth magnetic head where two head chips are arranged on a base. In a magnetic head 30 in Fig. 5, two housing portions are provided in a head base 31 which is previously formed from conductive resin materials and head chips 32 and 33 without winding wires are buried in the housing portions and fixed. As a fixing method for fixing the head chips 32 and 33 in the housing portions of the head base 31, each head chip is pressed and fitted to the housing portion, or an adjacent portion of the housing portions is heated and fixed after each head chip is fitted into the housing portion.

Also, when the head base 31 is produced by injection molding, the head chips 32 and 33 can be held in a die and be molded as an unit, instead of fitting the head chips 32 and 33 into the housing portions previously supplied in the head base 31. That is, if conductive resin materials are injected and molded after the head chips 32 and 33 are held in predetermined positions in the die, the head chips 32 and 33 are fitted to the head base 31 at hardening (die temperature 200 °C ) at the same time, so that a chip bonding process is no longer needed. Then, winding members 36 and 37 are wound around the head chips 32 and 33 and the ends of the members 36 and 37 are soldered to a terminal strip 40 on the head base 31.

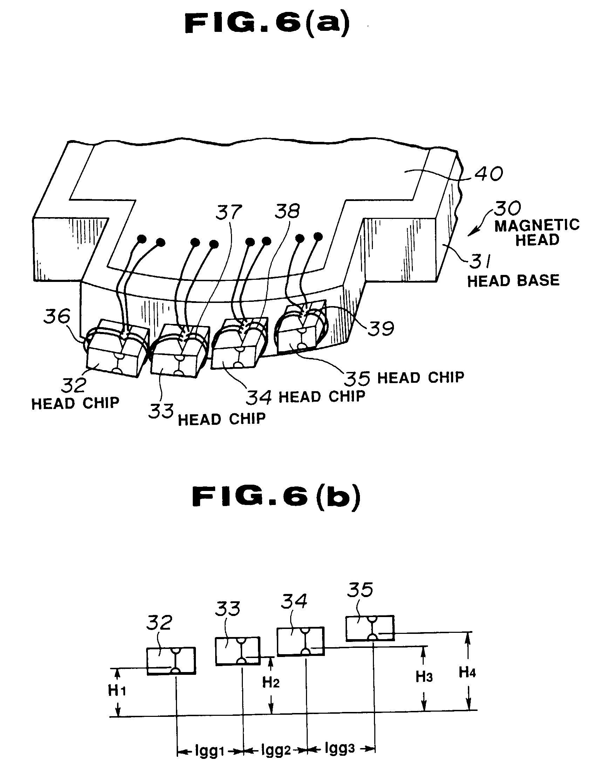

Fig. 6 shows a modification of the head of Fig. 5. Fig. 6(a) is a perspective view and Fig. 6(b) shows a relationship of the positions between the horizontal and height directions of four head chips.

In this modification, there are provided four channel heads for broadcasting VTR. In Fig. 6, four housing portions are provided in the head base 31 which is previously formed from conductive resin materials. In the four housing portions, four head chips 32, 33, 34 and 35 are buried and fixed. The method of fixing the head chips 32-35 in the housing portions in the head base 31 is the same method as the case of Fig. 5. Each head chip is pressed and fitted into the housing portions, or an adjacent portion of the housing portion is heated and fixed after each head chip is fitted into the housing portion.

Also, as shown in the case of Fig. 5, when the head base 31 is molded by injection, the head chips 32-35 are held in a die and can be also molded as a unit at the same time. That is, conductive resin materials are injected and molded, so that the head base 31 is produced; however, if the head base is molded by injection after the head chips 32-35 are held in predetermined positions in the die, the four head chips 32-35 are fitted to the head base 31 at the same time of hardening. After that, winding members 36, 37, 38 and 39 are wound around the four head chips 32-35, respectively and the ends of the members 36-39 are soldered to the terminal strip 40. In this case, when each head chip 32-35 is buried and formed, the determination of heights H1, H2, H3 and H4 from the base of each chip and gap intervals between each chip l_{gg1}, l_{gg2} and l_{gg3} makes it possible to fit the chip into the base 31 and at the same time to arrange correctly the position of each fitted chip.

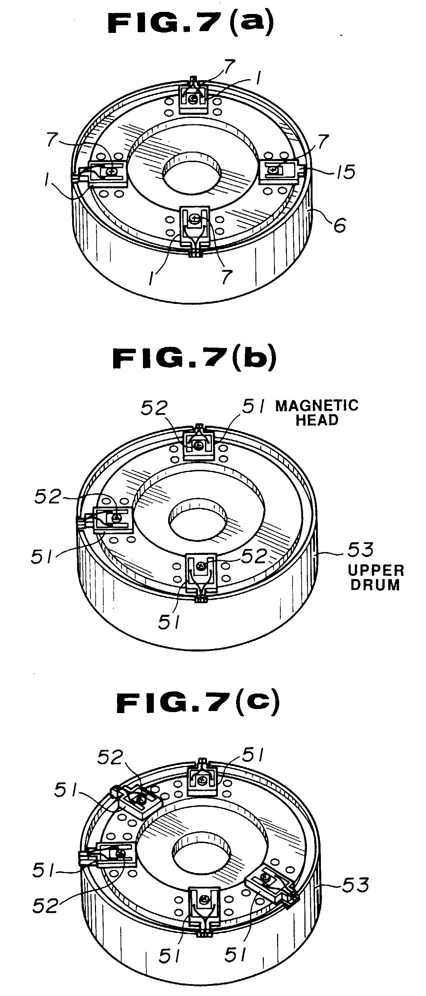

In Fig. 7, the third embodiment of this invention is explained. How to fit three heads or five heads on the rotary drum is explained. Fig. 7 (a) shows that a former magnetic head using a brass base is fitted on the upper drum. Figs. 7(b) and (c) show the condition in which a discrete magnetic head using base materials formed from conductive resin materials which are explained in the first embodiment is fitted on the upper drum.

As shown in Fig. 7(a), when three former magnetic heads 1 using a brass base are fitted on the upper drum 6, the three magnetic heads 1 are disposed by the interval of 90° to the center. Further, in order to make the drum keep a rotary balance, a dummy base 15 is screwed with a screw 7. On the other hand, since a magnetic head 51 in Fig. 7(b) using base materials formed from conductive resin materials has about 1/5 of the weight of the former head, it is not especially necessary to fit the dummy base for balancing when the head 51 is fixed on the upper drum 53 with a screw 52. Similarly, in a case of five heads, the dummy base for balancing is not needed as shown in Fig. 7(c).

Also, in Fig. 7, a case in which the discrete magnetic head 51 is disposed on the upper drum 53 is explained. However, when the head base is formed as an unit in order to attach a plurality of magnetic heads on a head base as shown in the embodiment in Fig. 1, a dummy base portion and the head base 22 can be also molded as a unit at molding.

According to the embodiments mentioned above, the use of conductive resin materials for the head base reduces the weight of the head base to about 1/5 of a former head base and especially makes a VTR apparatus lighter when a plurality of magnetic heads are used. Also, because synthetic resin is used, injection molding can be performed, so that a complicated base board can be produced. A base board of a complicated shape can be easily produced with high precision. Therefore, when positions of a plurality of heads having different head heights such as a magnetic head for broadcasting are determined, the positions can be determined by a casting with precision. Also, the position in the horizontal (circumference) direction between the heads can be determined with precision at molding. Further, the base materials used for the above mentioned embodiments have low thermal conductivity. Accordingly, when a lead wire connected with a rotary transformer is soldered to the terminal strip on the base, the adjacent portion does not melt and the work efficiency is good. Also, since the molding materials having conductivity are used, a head chip which needs to prevent electrification can be electrically connected to the head base. In addition, because the material has light weight, when an odd number of heads are disposed on the drum as in the case when a flying erase head is used, the dummy base for balancing is not required. Also, when dummy forming is needed, the dummy base can be formed at the same time of the molding.

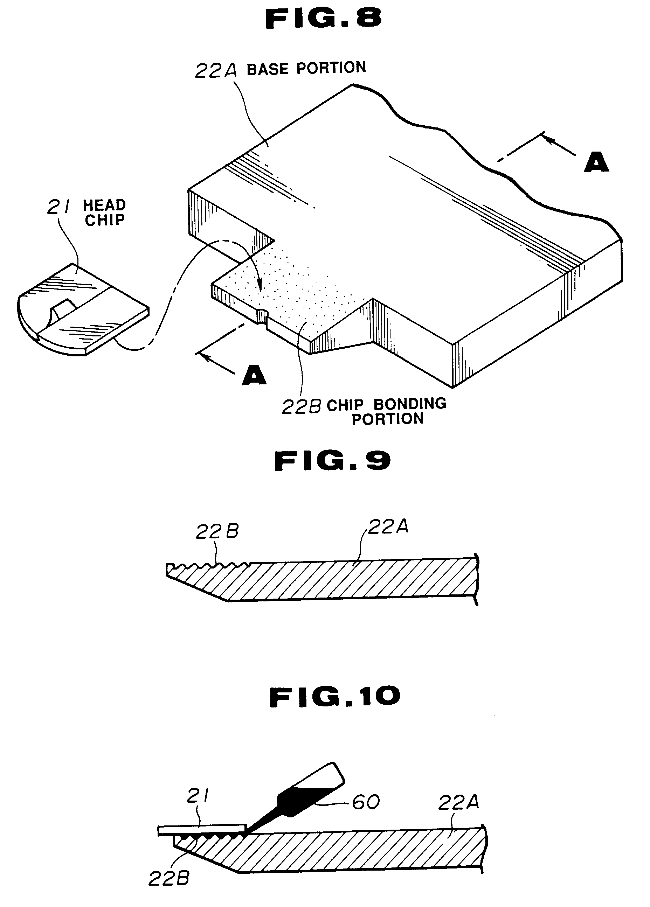

Fig. 8 is a perspective view showing a chip bonding portion on a magnetic head of the fourth embodiment of this invention. Fig. 9 is a sectional view taken on the line A-A in Fig. 8. Fig. 10 is a side and sectional view showing a chip bonding method.

In this embodiment, when the head chip 21 is bonded on the conductive head base 22 formed by injection molding, the weak chip bonding strength, which is a drawback of plastic, can be made stronger and also the conductivity of the bonding portion can rise higher provided that the surface roughness of a chip bonding portion 22B is made partly rougher as shown in Figs. 8 and 9. The partly rougher chip bonding portion can be easily made if chemical etching is performed when the die is produced. As shown in Fig. 10, the head chip 21 is bonded by an adhesive agent 60 to the bonding portion 22B where the surface roughness is made rougher. After that, a wire is wound around the head chip 21 as mentioned above and the end of the wire is connected to the terminal strip formed on a surface (the opposite surface to the illustrated surface) of the base portion 22A.

As mentioned above, where the surface roughness of the bonding portion 22B to which the head chip 21 is bonded is made rougher, the head chip bonding strength becomes stronger, so that the magnetic head can be mass-produced and that the conductivity between the head chip and the head base rises higher. Thus, the magnetic head having stronger mechanical strength and superior electric efficiency can be manufactured.

## Claims

1. A rotary type magnetic head comprising a head chip (21) consisting of magnetic substances and a head base (22) for fixing said head chip, the head base (22) having an approximately circular shape so as to fit a shape of a rotary drum, characterised in that:
said head base is made of conductive resin materials, said head base has been molded as a unit, using a die, and said head base holds said head chip in a predetermined position, said predetermined position being obtained by holding said head chip in said predetermined position in the die when the head base is molded.

2. The magnetic head according to claim 1 comprising a plurality of said head chips.

3. The magnetic head according to claim 1, or 2, wherein said conductive resin materials contain at least carbon and synthetic resin.

4. The magnetic head according to claim 1, 2, or 3 wherein said head base for fixing said head chip has a housing portion for each chip and each head chip is fitted into the respective housing portion and settled.

5. The magnetic head according to claim 4 when dependent on claim 2, wherein said head base has a plurality of base portions (22A) projecting from the circumference of the head base, and supporting the housing portions for fixing said plurality of head chips.

6. The magnetic head according to claim 2, wherein said head base for fixing said plurality of head chips holds said plurality of head chips in predetermined positions, said predetermined positions being obtained by holding said head chips in said predetermined positions in the die when the head base is molded so that relative positions in horizontal and vertical directions between said head chips are determined.

7. A head apparatus comprising a magnetic head as claimed in any preceding claim, wherein the head is disposed on the rotary drum.

8. The head apparatus according to claim 7,
wherein said head apparatus has a dummy base in the form of a housing portion without a head chip bonded to it disposed for rotatively balancing said rotary drum and the dummy base is molded as a unit with said head base by using said conductive resin materials.

## Patentansprüche

1. Rotationsmagnetkopf mit einem Kopfchip (21) aus magnetischen Substanzen und einem Kopfgrundkörper (22) zum Befestigen des Kopfchips, wobei der Kopfgrundkörper (22) eine annähernd runde Form hat, um ihn an die Form einer Rotationstrommel anzupassen, dadurch gekennzeichnet, daß der Kopfgrundkörper aus leitfähigem Kunststoff besteht und als Einheit mit dem Kopfchip in einer vorgegebenen Position unter Verwendung einer Form geformt worden ist, wobei diese vorgegebene Position durch Halten des Kopfchips in dieser vorgegebenen Position in der Form während der Formung des Kopfgrundkörpers erhalten wurde.

2. Magnetkopf nach Anspruch 1 mit einer Vielzahl von Kopfchips.

3. Magnetkopf nach Anspruch 1 oder 2, bei welchem der leitfähige Kunststoff zumindest Kohlenstoff und Kunstharz enthält.

4. Magnetkopf nach Anspruch 1, 2 oder 3, bei welchem der Kopfgrundkörper zum Befestigen des Kopfchips einen Gehäusebereich für jeden Chip aufweist und jeder Kopfchip in den jeweiligen Gehäusebereich eingepaßt und befestigt ist.

5. Magnetkopf nach Anspruch 4, soweit er vom Anspruch 2 abhängig ist, bei welchem der Kopfgrundkörper eine Vielzahl aus seinem Umfang herausragender Sockelbereiche (22A) aufweist, welche die Gehäusebereiche zum Befestigen der Vielzahl von Kopfchips enthalten.

6. Magnetkopf nach Anspruch 2, bei welchem der Kopfgrundkörper zum Fixieren der Vielzahl von Kopfchips dieselben in vorgegebenen Positionen hält, wobei diese vorgegebene Positionen durch Halten der Kopfchips in diesen vorgegebenen Positionen in der Form während der Formung des Kopfgrundkörpers erhalten wurden, so daß die relativen Positionen der Kopfchips untereinander in horizontaler und vertikaler Richtung bestimmt sind.

7. Kopfanordnung mit einem Magnetkopf nach einem der vorhergehenden Ansprüche, bei welcher der Kopf in einer Rotationstrommel angeordnet ist.

8. Kopfanordnung nach Anspruch 7, welche einen Leer-Grundkörper in Form eines Gehäusebereiches ohne dort befestigten Kopfchip aufweist, der zum Auswuchten der Rotationstrommel eingesetzt wird, und der Leer-Grundkörper als Einheit mit dem Kopfgrundkörper aus leitfähigem Kunststoff geformt ist.

## Revendications

1. Tête magnétique de type rotatif, comprenant une plaquette (21) de tête constituée de substances magnétiques et une base (22) de tête pour fixer ladite plaquette de tête, la base (22) de tête présentant une forme approximativement circulaire de manière à s'ajuster dans une forme d'un tambour rotatif, caractérisée en ce que:
ladite base de tête est faite de matériaux conducteurs en résine, ladite base de tête ayant été moulée en une pièce, au moyen d'une coquille, et en ce que ladite base de tête maintient ladite plaquette de tête dans une position prédéterminée, ladite position prédéterminée étant obtenue en maintenant ladite plaquette de tête en ladite position prédéterminée dans la coquille lorsque la base de tête est moulée.

2. Tête magnétique selon la revendication 1, comprenant plusieurs desdites plaquettes de tête.

3. Tête magnétique selon la revendication 1 ou 2, dans laquelle lesdits matériaux conducteurs en résine contiennent au moins du carbone et une résine synthétique.

4. Tête magnétique selon la revendication 1, 2 ou 3, dans laquelle ladite base de tête pour fixer ladite plaquette de tête présente un logement pour chaque plaquette, et chaque plaquette de tête est engagée dans le logement respectif et y est montée de manière stable.

5. Tête magnétique selon la revendication 4, dans laquelle lorsqu'elle dépend de la revendication 2, ladite base de tête présente plusieurs portions de base (22A) en saillie par rapport à la circonférence de la base de tête, et supportant les logements pour fixer lesdites plusieurs plaquettes de tête.

6. Tête magnétique selon la revendication 2, dans laquelle ladite base de tête, pour fixer lesdites plusieurs plaquettes de tête, maintient lesdites plusieurs plaquettes de tête dans des positions prédéterminées, lesdites positions prédéterminées étant obtenues en maintenant lesdites plaquettes de tête dans lesdites positions prédéterminées dans la coquille lorsque la base de tête est moulée, de telle sorte que des positions relatives entre lesdites plaquettes de tête sont déterminées dans la direction horizontale et dans la direction verticale.

7. Agencement de tête, comprenant une tête magnétique selon l'une quelconque des revendications précédentes, dans lequel la tête est disposée sur le tambour rotatif.

8. Agencement de tête selon la revendication 7, dans lequel ledit agencement de tête présente une base factice, sous la forme d'un logement sans plaquette de tête liée à celui-ci, disposé pour équilibrer ledit tambour rotatif en rotation, la base factice étant moulée en une pièce avec ladite base de tête en utilisant lesdits matériaux conducteurs en résine.
